# EUROPÄISCHE PATENTSCHRIFT

(11) **EP 2 544 972 B1**
(45) Veröffentlichungstag und Bekanntmachung des Hinweises auf die Patenterteilung: **07.05.2014**
(21) Anmeldenummer: 11707824.6
(22) Anmeldetag: 03.03.2011
(51) Int. Cl.: B65G 1/04, B65G 1/137, B65G 57/00, B65G 59/00

(54) **VERFAHREN DER WARENBEVORRATUNG UND -KOMMISSIONIERUNG**
METHOD FOR STORING AND ORDER-PICKING ARTICLES
PROCÉDÉ DE STOCKAGE ET DE PRÉPARATION DE COMMANDES D'ARTICLES

(30) Priorität: 09.03.2010 DE 102010015887
(43) Veröffentlichungstag der Anmeldung: 16.01.2013
(73) Patentinhaber: Dynamic System Engineering B.V., 7005 AG Doetinchem (NL)
(72) Erfinder: LIEFTINK, Willem Johan, NL-7091 XG Dinxperlo (NL); OTTEN, Sjoerd Jerk, NL-6999 CN Hummelo (NL)
(74) Vertreter: Christophersen, Ruth
(86) Internationale Anmeldenummer: PCT/EP2011/053218
(87) Internationale Veröffentlichungsnummer: WO 2011/110474

(56) Entgegenhaltungen:
- DE-A1-102006 025 618
- DE-U1- 20 306 390

## Beschreibung

Die Erfindung betrifft ein Verfahren der Warenbevorratung und -kommissionierung nach dem Oberbegriff des Patentanspruchs 1.

Verfahren mit diesen Merkmalen, wenngleich ohne die Alternative der Anordnung einer einzelnen Warenschicht auf der Palette selbst, sind aus der DE 10 2006 025 618 A1 und aus der DE 203 06 390 U1 bekannt. Bei diesen Verfahren erfolgt ein Umsetzen der auf einer Palette in mehreren Schichten übereinander angelieferten Waren auf einzelne Tablare, also flache Trageplattformen, wobei sich nach dem Umsetzen auf jedem Tablar nur eine einzige Schicht Waren befindet. Die so mit Waren bestückten Tablare werden dann an einen Lagerplatz innerhalb eines Tablarlagers transportiert, wo sie in Stellplätze eingelagert werden.

Aus der EP 1 035 045 B1 ist eine Warenkommissionierung unter Einsatz eines aus Regalen bestehenden Lagerbereichs für beladene Paletten, und eines von dem Lagerbereich räumlich getrennten Kommissionierbereichs bekannt. Der Kommissionierbereich setzt sich aus einer Vielzahl von Rollenbahnen zusammen, auf denen jeweils gleichartige Waren bzw. Warengebinde wie z. B. Pakete gelagert werden. Das Zusammenstellen der Waren gemäß jeweiliger Order (Kommissionierung) erfolgt programmgesteuert ausschließlich in dem Kommissionierbereich, wohingegen der Lagerbereich nur die vorrätigen, noch nicht entladenen Warenpaletten aufnimmt. Das in der EP 1 035 045 B1 beschriebene Verfahren hat Vorteile bei umsatzstarken, d. h. häufig nachgefragten Waren. Diese werden im Handel auch als "Schnelldreher" bezeichnet. In dem vollautomatisch arbeitenden Kommissionierbereich lässt sich eine große Zahl unterschiedlicher Waren sehr schnell zu versandfertigen Gebinden zusammenstellen.

Allerdings werden im Sortiment eines Supermarkts oder einer Supermarktkette auch viele Waren geführt, die weniger oder selten selten nachgefragt werden, sogenannte "Langsamdreher". Bei solchen Waren würde die mit der Anlage nach der EP 1 035 045 B1 erreichbare Umschlagkapazität nur unzureichend genutzt, was daher unwirtschaftlich wäre.

Für die Kommissionierung weniger gefragter Waren bzw. Warenpakete sind bereits Kommissioniersysteme am Markt, bei denen neu angelieferte Warenpaletten zunächst vollständig geleert werden, indem die gestapelten Waren auf Tablare umgeladen werden, wobei jedes Tablar mit nur einer Warenlage bzw. Warenschicht gefüllt wird. Diese Tablare werden anschließend mittels eines speziell für die Tablare konzipierten Regalbediengerätes in einem Lagerbereich abgesetzt. Der Lagerbereich setzt sich, wie z. B. in der DE 203 06 390 U1 beschrieben, aus Regalen zusammen, die durch Schienen vertikal in einzelne Fächer unterteilt sind, wobei jedes Fach ein auf den Schienen abgestelltes Tablar mit darauf lagernden Waren aufnehmen kann. Da es Waren unterschiedlicher Größe gibt, sind in der Praxis diese Fächer nicht einheitlich, sondern es gibt Fächer größerer Höhe zur Aufnahme von Tablaren mit voluminösen Waren oder Paketen, und Fächer mit geringerer Höhe zur Aufnahme von Tablaren mit relativ flachen Waren. Gemeinsam ist allen Fächern eine ausreichende Höhenreserve bis zum nächst oberhalb gelegenen Fach, damit jedes einzelne Tablar einschließlich der Waren sicher und ohne Kollisionsgefahr in dem Fach abgesetzt und daraus entnommen werden kann. Diese Höhenreserve verschlechtert das Verhältnis zwischen Netto- und Bruttovolumen der Lagerplätze, d. h. das Verhältnis zwischen dem tatsächlichen Warenvolumen und dem Volumen, welches das Lagerregal beansprucht.

Von Nachteil ist ferner, dass die von beiden Seiten her in die Fächer ragenden Schienen, um genügend Aufstandsfläche für die Tablare zu bieten, Breite beanspruchen und so ebenfalls das genannte Verhältnis verschlechtern.

Der Erfindung liegt die **Aufgabe** zugrunde, ein Verfahren der Bevorratung und-kommissionierung von Waren oder Warenpaketen zu schaffen, das bei gleicher, für eine Kommissionierung zur Verfügung stehender Warenmenge eine Reduzierung des an den Lagerplätzen benötigten Bruttovolumens oder, umgekehrt, bei gleichem Bruttovolumen eine Erhöhung der für eine Kommissionierung zur Verfügung stehenden Warenmenge ermöglicht.

Zur **Lösung** wird ein Verfahren der Warenbevorratung und -kommissionierung mit den Merkmalen des Anspruchs 1 vorgeschlagen.

Ebenso wie beim Stand der Technik erfolgt eine Lagerung der Waren, welche auch Warenpakete sein können, auf speziellen Tablaren, wodurch zur Kommissionierung der einzelnen Ware ein direkter Zugriff auf ein Tablar mit einer solchen Ware möglich ist. Eine Besonderheit des erfindungsgemäßen Verfahrens ist die unmittelbare, d. h. abstandslose Schichtung der jeweils aus einem Tablar und der darauf lagernden Warenlage bestehenden Einheiten zu Stapeln. Innerhalb dieser Stapel werden vertikale Zwischenräume zwischen den Einheiten vermieden, wodurch jeder Lagerplatz zur Unterbringung eines Stapels nur wenig Höhe beansprucht, die nicht größer ist als die summierte Höhe der Tablare und Warenlagen.

Aber auch bei der Breite des einzelnen Lagerplatzes lässt sich eine Reduzierung erreichen. Da regalfest montierte Schienen als Auflage der einzelnen Tablare entfallen, entfällt auch der auf die Schienen entfallende Anteil an der Breite der Lagerplätze. Zudem führt der Wegfall einer Einzelfachunterteilung durch Schienen zu einem verminderten Konstruktions- und Erstellungsaufwand der Lagerregale, und damit zu geringeren Investitionskosten für den Betreiber.

Bei einer neu angelieferten Warenpalette erfolgt in einem ersten Schritt ein Umsetzen der Waren. Hierbei werden die Waren auf mit Handhabungsstrukturen für ein Regalbediengerät versehenen Tablaren angeordnet, wobei sich auf jedem Tablar nur eine einzige Schicht Waren befindet. Alternativ kann die unterste Warenlage der Warenpalette auf der Palette verbleiben, insofern bildet auch die Palette selbst ein Tablar.

Sodann werden die so mit je einer Lage Waren bestückten Tablare an einem Lagerplatz innerhalb eines Lagerbereichs in aufeinander geschichteter Anordnung platziert. Wiederum kann sich eine Warenlage der geschichteten Anordnung unmittelbar auf der Palette befinden bzw. auf dieser verbleiben, so dass diese Palette selbst ein Tablar bildet, nämlich das unterste Tablar der Anordnung.

Alternativ ist eine Anordnung am Lagerplatz möglich, bei der die Palette als zusätzliches Lagerhilfsmittel dient, auf der sich der Stapel aus jeweils bestückten Tablaren befindet.

Für den Transport zu dem jeweiligen Lagerplatz innerhalb eines unter Umständen ausgedehnten Lagerbereichs bestehen zwei Möglichkeiten. Entweder werden die Tablare mit den darauf angeordneten Waren einzeln, d. h. nacheinander, zu dem Lagerplatz transportiert, und dort erst zu einem Stapel geschichtet. Oder die Tablare mit den darauf angeordneten Waren werden in bereits geschichteter Anordnung, d. h. als Stapel, zu dem Lagerplatz transportiert und dort platziert.

Bei Vorliegen eines Kommissionsauftrags wird das mit der angeforderten Ware bestückte, obenauf in einem Warenstapel angeordnete Tablar angehoben und, vorzugsweise automatisiert, zu einer Einzelwarenentnahme transportiert. Dort wird eine Ware oder je nach Kommission auch mehrere von dem Tablar entnommen, und anschließend das so teilentleerte, d.h. nur noch teilweise bestückte Tablar in den Lagerbereich zurücktransportiert und von oben her auf einem aus vollständig bestückten Tablaren zusammengesetzten Warenstapel abgesetzt. Vorzugsweise ist dies derselbe Warenstapel, von dem das Tablar zuvor entnommen worden war.

Im Rahmen des erfindungsgemäßen Verfahrens kann die Ein- und Auslagerung der Palette von der einen, und die Ein- und Auslagerung der Tablare von der anderen der einander abgewandten Stirnseiten des jeweiligen Lagerplatzes aus erfolgen, oder alternativ von derselben Stirnseite des jeweiligen Lagerplatzes aus. In letzterem Fall erfolgt die Ein- und Auslagerung sowohl der Palette als auch der Tablare vorzugsweise durch dieselbe Transporteinrichtung, z. B. ein Regalbediengerät mit Greifvorrichtungen sowohl für eine gesamte Warenpalette, wie auch für einzelne Tablare.

Einzelheiten eines erfindungsgemäßen Verfahrens der Warenbevorratung und -kommissionierung werden nachfolgend anhand der zugehörigen Zeichnungen erläutert. Darin zeigen:
- Fig. 1: In einzelnen Schritten den Prozess eines Umladens von Waren von einer Warenpalette auf Tablare, auf denen sich jeweils nur eine Warenlage befindet;
- Fig. 2: eine zweite Ausführungsform eines Prozesses des Umladens von Waren von einer Warenpalette auf Tablare, auf denen sich jeweils nur eine Warenlage befindet;
- Fig. 3: eine Teildarstellung eines Lagerbereichs mit teils vollständigen Warenpaletten, und teils zur Kommissionierung vorbereiteten Waren, welche in Einzelschichten auf Tablaren abgelegt sind;
- Fig. 4: in teilweiser Seitenansicht des Regals mit Einzelheiten zu Transporteinrichtungen, mit denen sich komplette Warenpaletten und Tablare innerhalb des Lagerbereichs platzieren und entnehmen lassen;
- Fig. 5: in schematischer Darstellung eine Sensorik, um einzelne Warenlagen auf eine ebene Oberseite hin zu überprüfen und
- Fig. 6: eine alternative Ausführungsform der Tablare sowie des Verfahrens zur Entnahme eines beladenen Tablars von dem Warenstapel.

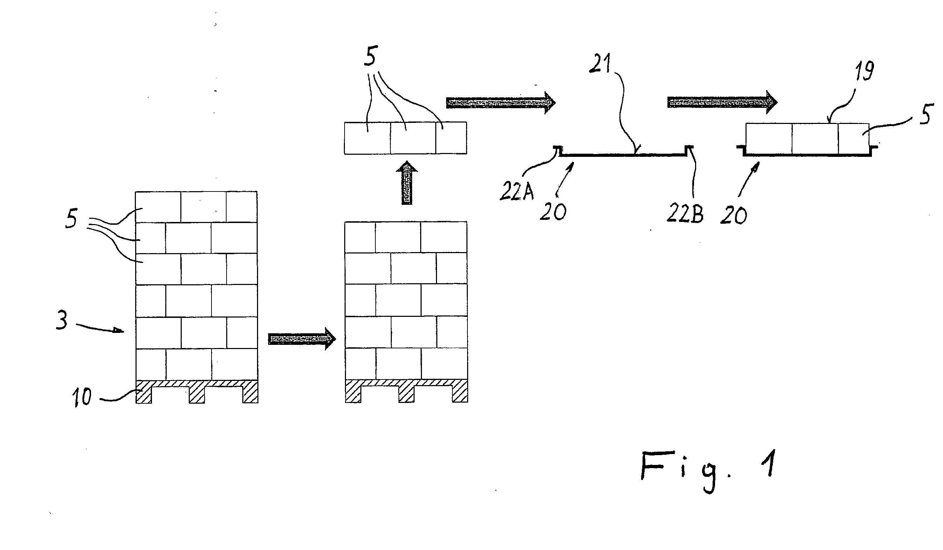

Die Fig. 1 zeigt links einen z. B. direkt vom Hersteller kommenden Palettenstapel 3 mit einer Vielzahl gleichartiger Waren 5, die in mehreren horizontalen Lagen geschichtet sind, wobei wiederum jede Lage eine Mehrzahl an Waren 5 enthält. Der Warenstapel befindet sich auf einer Palette 10. Dies ist vorzugsweise eine Standardpalette wie z. B. eine EURO-Palette oder eine SB-Palette. Die Waren 5 sind vorzugsweise quaderförmige Warenkartons, in denen sich die einzelnen Verbrauchswaren befinden.

In einem ersten Schritt werden die Waren lagenweise dem Palettenstapel 3 entnommen, und jede so entnommene Lage auf einem Tablar 20 abgelegt. Alternativ ist es möglich, die Waren 5 einzeln, d. h. Stück für Stück, dem Palettenstapel 3 zu entnehmen und ebenfalls einzeln, d. h. Stück für Stück, auf das Tablar 20 umzulagern, bis das Tablar mit einer vollständigen Warenschicht der gleichartigen Waren belegt ist.

Wenn das Umladen der Waren von dem Palettenstapel 3 auf die Tablare 20 ohne Neuorientierung der einzelnen Waren erfolgt, weist die dann auf dem Tablar 20 gebildete Warenschicht eine flache, ebene Oberseite 19 auf. Dies setzt selbstverständlich voraus, dass die Waren bzw. Warenpakete 5 auf dem Tablar nicht nur gleichartig, sondern auch von gleicher Höhe sind.

Bei einer Ausführungsform des Verfahrens werden so viele Tablare 20 dicht neben- und hintereinander mit Waren 5 befüllt, wie der Palettenstapel 3 horizontale Lagen mit Waren besaß. Jedoch kann die Anzahl der auf das einzelne Tablar 20 umgesetzten Waren 5 auch unterschiedlich zur Anzahl der Waren in den jeweiligen Lagen des Palettenstapels 3 sein. Jedoch sollten die umgesetzten Waren, soweit möglich, die ganze Beladefläche 21 des Tablars 20 ausfüllen.

Die Tablare 20 sind Trageplattformen mit einer ebenen, im Wesentlichen die Grundfläche der Palette 10 aufweisenden Beladefläche 21. Die Beladefläche 21 weist keine Unterteilung z. B. in Fächer auf. Die Unterseite des Tablars 20 ist ebenfalls flach und ohne Unterteilung. Jedoch kann die Unterseite, allerdings ausschließlich entlang ihrer vier Ränder, mit nach unten ragenden Rippen oder Vorsprüngen versehen sein. Diese können die Zentrierung auf der unterhalb angeordneten Warenlage unterstützen. Außerdem erhöhen solche Rippen oder Vorsprünge die mechanische Festigkeit des Tablars.

Für eine vollautomatische Warenkommissionierung vom Tablar kann die Beladefläche 21 jedes Tablars 20 als sich über diese Fläche erstreckendes Lochmuster gestaltet sein, wobei die Löcher in Reihen angeordnet sind, und diese Reihen mit gegenseitigem Abstand parallel zueinander verlaufen. Zum Vereinzeln aufliegender Ware oder Warenreihen fahren Stäbe von unten her durch diese Löcher hindurch, und heben so die Ware bzw. die Warenreihe soweit an, dass diese dann horizontal weggefördert werden kann.

Alternativ zu solchen Lochmustern kann für eine vollautomatische Warenkommissionierung vom Tablar dieses mit einem System nach oben vorstehender Rippen versehen sein, die Reihen bilden und in ihrer Gesamtheit die Beladefläche 21 bilden. Zum Vereinzeln aufliegender Ware oder Warenreihen fahren Stäbe von der Seite her längs der Rippen, und heben dann die Ware bzw. die Warenreihe soweit an, dass diese horizontal weggefördert werden kann

Bei den Ausführungsformen nach den Fign. 1 bis 4 schließen sich zu beiden Seiten an die Beladefläche 21 des Tablars vorzugsweise einstückig mit der Beladefläche 21 ausgebildete Handhabungsstrukturen 22A, 22B an. Die Handhabungsstrukturen 22A, 22B sind durch entsprechend gestaltete Ladegabeln eines Regalbediengerätes ergreifbar, um so das jeweilige Tablar 20 einschließlich der darauf angeordneten Warenschicht vertikal und/oder horizontal zu transportieren.

Die so mit jeweils einer vollständigen Warenschicht beladenen Tablare werden anschließend, z. B. unter Einsatz des Regalbediengerätes, auf der entleerten Palette 10 oder einer anderen leeren Palette als Unterlage abgesetzt. Dies erfolgt im Wege einer unmittelbaren Stapelung, d. h. schichtenweise werden die jeweils aus einem Tablar und einer Warenschicht bestehenden Einheiten direkt aufeinandergestapelt, bis der ursprüngliche Warenstapel, nunmehr jedoch mit Tablaren 20 als Trennschichten versehen, wieder komplettiert ist.

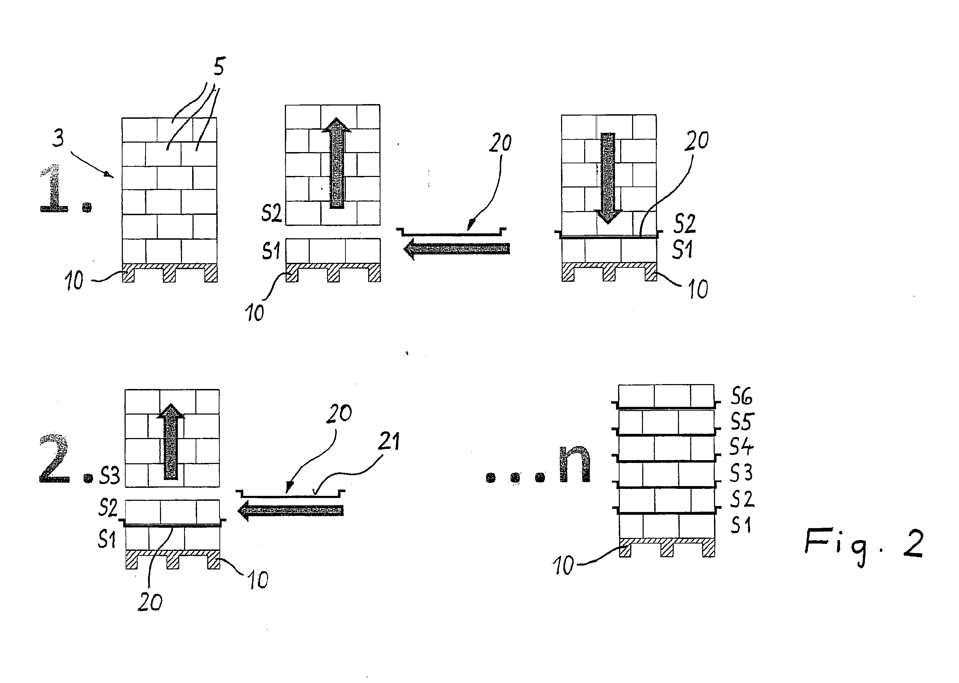

In Figur 2 ist eine abweichende Ausgestaltung des Umsetzens der Waren 5 wiedergegeben. Hierbei verbleibt die unterste Warenschicht S1 an ihrem Platz, d. h. unmittelbar auf der Palette 10. Die übrigen Warenschichten werden gemeinsam angehoben und ein erstes, d. h. unterstes Tablar 20 zwischen der untersten Warenschicht S1 und der nächsten Warenschicht S2 angeordnet, und daraufhin der Warenstapel wieder abgesetzt. Nunmehr befindet sich zwischen der untersten und der zweituntersten Warenschicht ein erstes Tablar. Sodann wird in einer nächsten Stufe der Warenstapel mit Ausnahme der beiden untersten Warenschichten S1, S2 angehoben, und wiederum ein Tablar 20 in den gebildeten horizontalen Abstand eingesetzt, und der Warenstapel anschließend wieder abgesetzt. Schritt für Schritt gelangen auf diese Weise Tablare 20 zwischen die einzelnen Warenschichten S1 - S6, wobei lediglich die unterste Warenschicht 31 nicht auf einem Tablar, sondern unmittelbar auf der Palette 10 aufliegt.

Gemäß einer Verfahrensvariante wird der so zusammengesetzte und auf der Palette 10 aufliegende Warenstapel anschließend mit Hilfe des Regalbediengerätes oder mit Hilfe eines Gabelstaplers an einen freien Lagerplatz 31 innerhalb eines Lagerbereichs 30 transportiert, und dort abgesetzt.

Gemäß einer anderen Verfahrensvariante erfolgt der Transport zu dem freien Lagerplatz 31 nicht als Warenstapel, sondern die Tablare 20 mit den darauf angeordneten Waren werden einzeln, d. h. nacheinander, zu dem Lagerplatz 31 transportiert, und dort aufeinander geschichtet. Dies erfolgt entweder direkt auf dem Boden des Lagerplatzes 31, oder auf einer dort als Unterlage oder Lagerhilfsmittel bereitgestellten Palette 10.

Gemäß einer weiteren Verfahrensvariante wird, sofern die unterste Warenlage S1 nicht auf einem Tablar, sondern unmittelbar auf der Palette 10 aufliegt, zunächst diese Einheit bestehend aus der Palette 10 und der untersten Warenlage S1 an den Lagerplatz 31 transportiert. Anschließend werden die restlichen Einheiten bestehend jeweils aus einem Tablar 20 und der darauf angeordneten Warenlage darauf aufgeschichtet.

Um aus den mit Waren versehenen, aufgeschichteten Tablaren einen stabilen Stapel zu schaffen, muss die aus den Waren gebildete Oberseite jeweils eben und ohne Neigung sein.

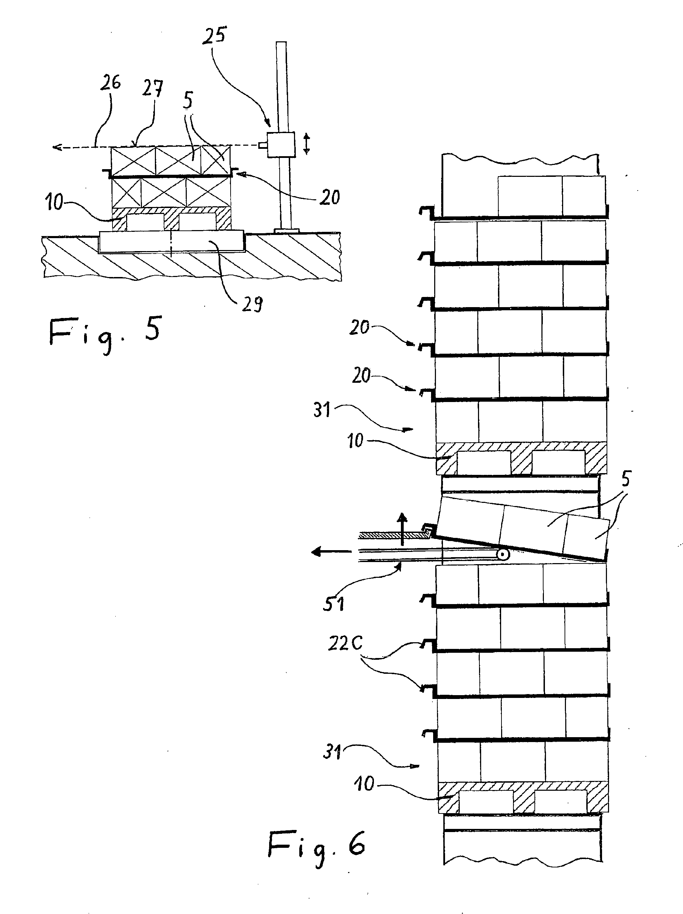

Fig. 5 zeigt eine Sensorik zur Überprüfung dieser Randbedingungen. Eine in beliebigen Höhenlagen einstellbare Messeinrichtung 25 überprüft mittels eines horizontalen Messstrahls 26, ob die Oberseite 27 der zuletzt gebildeten Warenlage horizontal und eben ist bzw. ihre Ebenheit und/oder ihre Horizontalität von einem vorgegebenen Wertebereich nicht zu stark abweicht. Nur wenn diese Bedingung erfüllt ist, wird das nächste, warenbeladene Tablar aufgeschichtet. Um mit der Messeinrichtung 25 die gesamte Oberseite 27 zu erfassen, liegt der bereits gebildete Warenstapel auf einem um eine vertikale Achse drehbaren Tisch 29 auf.

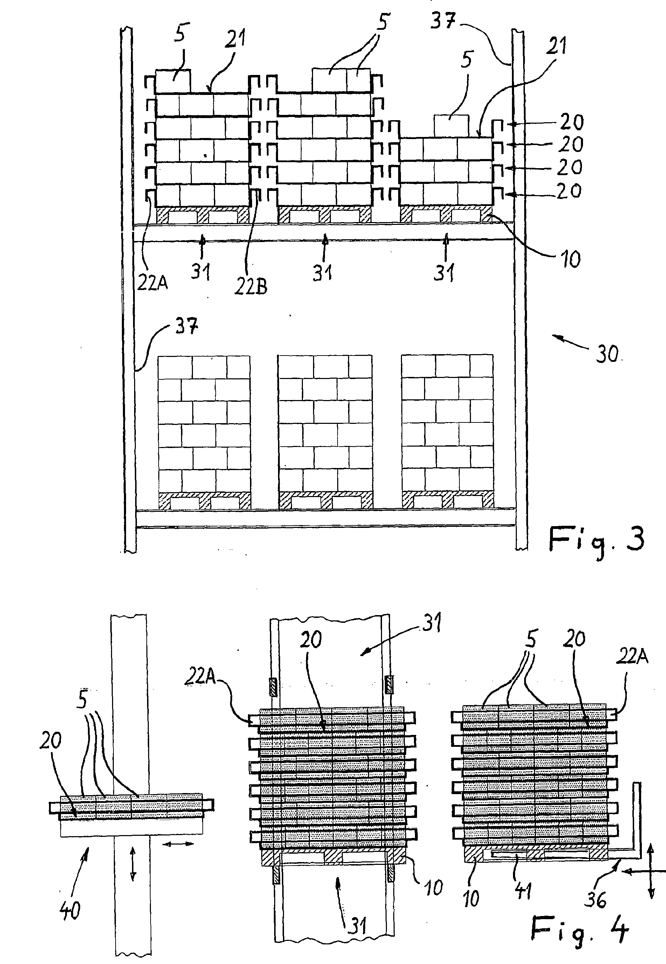

Fig. 3 zeigt in einer Stirnansicht einen Ausschnitt aus einem solchen aus Regalen bestehenden Lagerbereich 30, wobei in einer unteren Ebene ursprüngliche, vom Hersteller neu angelieferte Warenstapel 3 platziert sind, hingegen in einer oberhalb angeordneten Ebene die bereits umgesetzten, d. h. in einzelne Warenschichten durch Tablare 20 getrennten Warenstapel. Selbstverständlich ist auch eine andere Einlagerung möglich oder auch eine vollständige Trennung jener Lagerregale und -plätze, in denen neu angelieferte Warenstapel stehen, von jenen Lagerregalen und -plätzen, in denen die Waren bereits schichtenweise auf Tablaren abgelegt sind.

Gemäß Fig. 3 ist das Regal ohne regalfest montierte Schienen ausgebildet, wie sie beim Stand der Technik als Auflage für einzelne Tablare dienen. Soweit daher der einzelne Lagerplatz 31 zur Seite hin vertikale Begrenzungen 37 hat, sind diese gemäß Fig. 3 glatt und ohne Vorsprünge ausgebildet. Mit dem Wegfall solcher Schienen entfällt auch der auf die Schienen entfallende Anteil an der Breite der Lagerplätze.

Zudem können, wie ebenfalls Fig. 3 zeigt, zwei, drei oder mehr Lagerplätze 31 abstandslos nebeneinander angeordnet sein, d.h. ohne Stützen oder anderweitige seitliche Begrenzungen 37 zwischen ihnen. Auch dies verbessert das Verhältnis zwischen Netto- und Bruttovolumen der Lagerplätze, d. h. das Verhältnis zwischen dem tatsächlichen Warenvolumen und dem Volumen, welches das Lagerregal 30 beansprucht

Zur Kommissionierung einzelner Waren entsprechend einer vorliegenden Order wird ausschließlich das oberste Tablar des die betreffende Ware enthaltenden Warenstapels angehoben, und zu einer Einzelwarenaufnahme transportiert, in der die Ware dann von dem Tablar entnommen und, ggf. zusammen mit anderen Waren, zu dem Kommissionsauftrag zusammengestellt wird.

Das so teilentleerte Tablar 20 wird sodann in den Lagerbereich zurücktransportiert, und auf einem aus vollständig bestückten Tablaren 20 zusammengesetzten Warenstapel abgesetzt. Vorzugsweise erfolgt dies auf demselben Warenstapel, von dem das Tablar zuvor entnommen worden war. Jedoch ist es ebenso möglich, das zurück in den Lagerbereich transportierte, teilentleerte Tablar an einem anderen Lagerplatz 31 und daher nicht auf demselben Warenstapel abzusetzen, von dem das Tablar zuvor entnommen worden war.

Der in Fig. 3 wiedergegebene Lagerbereich 30 zeigt in der oberen Ebene drei Lagerplätze 31 mit jeweils einem durch Tablare untereilten Warenstapel, wobei sich auf dem linken Warenstapel auf dem obersten Tablar nur noch eine Ware, und auf dem mittleren Warenstapel auf dem obersten Tablar noch zwei Waren befinden. Von dem rechten Warenstapel wurde bereits eine größere Anzahl an Waren kommissioniert, weshalb zwei Tablare bereits vollständig entleert und entfernt wurden. Erst auf dem ursprünglich dritten Tablar von oben befindet sich noch eine Ware. Fig. 3 lässt daher erkennen, wie in Abhängigkeit von den Kommissionsordern die einzelnen Warenstapel 3 von oben nach unten "abgearbeitet" werden.

Vollständig entleerte Tablare 20 werden zu einem Ablageort transportiert, wo sie dann für eine Neubestückung zur Verfügung stehen. Für eine volumensparende Unterbringung an diesem Ablageort sind alle Tablare 20 von identischer Gestalt, und vor allem aufeinander stapelbar gestaltet.

Alternativ ist es möglich, direkt am jeweiligen Lagerplatz 31 zu kommissionieren. In diesem Fall verbleibt, auch bei der Entnahme einer Ware, der jeweilige Warenstapel vollständig an seinem Lagerplatz 31. Stattdessen wird die jeweilige Ware direkt an Ort und Stelle, d. h. am Lagerplatz 31, von dem jeweils obersten Tablar 20 entnommen. Bei dieser Ausgestaltung des Verfahrens sind Greifvorrichtungen erforderlich, um eine einzelne Ware 5 innerhalb des Lagerbereichs von dem Tablar 20 zu separieren.

Die Handhabung der Warenstapel sowie der Tablare ist in Fig. 4 wiedergegeben. Es bestehen grundsätzlich zwei Möglichkeiten. Entweder erfolgt die Ein- und Auslagerung der mit Waren versehenen Palette 10 von der einen, und die Ein- und Auslagerung der Tablare 20 von der anderen der einander abgewandten Stirnseiten des jeweiligen Lagerplatzes 31 aus. Oder aber die Ein- und Auslagerung der mit Waren versehenen Palette 10 und die Ein- und Auslagerung der Tablare 20 erfolgt von derselben Stirnseite des jeweiligen Lagerplatzes 31 aus. In diesem letzteren Falle erfolgt die Ein- und Auslagerung sowohl der mit Waren beladenen Palette 10, als auch der Tablare 20 durch dieselbe Transporteinrichtung, vorzugsweise ein vollautomatisch betriebenes Regalbediengerät 40. Dieses ist sowohl mit Gabeln 36 versehen, welche in bekannter Weise in Aussparungen 41 der Palette 10 einfahren, als auch mit Transportgabeln, welche, auf einem etwas größeren Abstand, in die beiden Handhabungsstrukturen 22A, 22B an den Seiten der Tablare 20 einfahrbar sind, um diese anzuheben und an den Bestimmungsort zu transportieren. Das Einfahren der Transportgabeln in oder unter die Handhabungsstrukturen 22A, 22B wird durch eine Positionssensorik des Regalbediengeräts 40 unterstützt.

Die Ausführungsform nach Fig. 6 unterscheidet sich hinsichtlich der Gestaltung der Tablare, der Technik bei deren Entnahme sowie auch hinsichtlich der erforderlichen Größe des jeweiligen Lagerplatzes.

Die Tablare 20 verfügen in diesem Fall nicht über seitlich angeordnete Handhabungsstrukturen 22A, 22B, wodurch die Breite des jeweiligen Lagerplatzes 31 noch einmal geringer ausfallen kann. Stattdessen ist jedes Tablar 20 zur Entnahmeseite des Regals hin mit einer Handhabungsstruktur 22C versehen, an der sich der vordere Rand des jeweiligen Tablars 20, wie in Fig. 6 dargestellt, etwas anheben lässt. In der so einseitig angehobenen Lage lässt sich in den entstandenen Spalt ein Horizontalförderer 51 einfahren, um das Tablar 20 einschließlich der darauf aufliegenden Waren 5 von dem Warenstapel herunterzuziehen.

### Bezugszeichenliste

- 3: Warenpalette
- 5: Ware
- 10: Palette
- 19: Oberseite
- 20: Tablar
- 21: Beladefläche
- 22A: Handhabungsstruktur
- 22B: Handhabungsstruktur
- 22C: Handhabungsstruktur
- 25: Messeinrichtung
- 26: Messstrahl
- 27: Oberseite der Warenlage
- 29: Drehtisch
- 30: Lagerbereich
- 31: Lagerplatz
- 36: Ladegabel
- 37: Begrenzung
- 40: Regalbediengerät
- 41: Aussparung in der Palette
- 51: Horizontalförderer

- S1: Warenschicht
- S2: Warenschicht
- S3: Warenschicht
- S4: Warenschicht
- S5: Warenschicht
- S6: Warenschicht

## Patentansprüche

1. Verfahren der Warenbevorratung und -kommissionierung mit den Schritten:
a) Bereitstellen einer Warenpalette (3) aus in mehreren horizontalen Lagen geschichteten, gleichartigen Waren (5), wobei jede Lage eine Mehrzahl der Waren enthält,
b) Umsetzen der Waren unter Anordnung sämtlicher Waren der Warenpalette entweder auf Tablaren (20) oder auf der Palette (10), wobei sich auf jedem Tablar bzw. der Palette nur eine einzige Schicht Waren (5) befindet,
c) Platzieren der so mit Waren (5) bestückten Tablare (20) an einem Lagerplatz (31) innerhalb eines Lagerbereichs (30),
**dadurch gekennzeichnet, dass** das Platzieren der bestückten, mit Handhabungsstrukturen (22A, 22B, 22C) für ein Regalbediengerät (40) versehenen, Tablare (20) in aufeinander geschichteter Anordnung erfolgt.

2. Verfahren nach Anspruch 1, **gekennzeichnet durch** die geschichtete Anordnung der bestückten Tablare auf der Palette (10) als Unterlage.

3. Verfahren nach Anspruch 1, **gekennzeichnet durch** die geschichtete Anordnung der bestückten Tablare auf der mit einer Warenschicht (S1) bestückten Palette (10) als Unterlage.

4. Verfahren nach einem der Ansprüche 1 bis 3, **dadurch gekennzeichnet, dass** die Tablare mit den darauf angeordneten Waren einzeln zu dem Lagerplatz (31) transportiert und dort aufeinander geschichtet werden.

5. Verfahren nach einem der Ansprüche 1 bis 3, **dadurch gekennzeichnet, dass** die Tablare mit den darauf angeordneten Waren in bereits geschichteter Anordnung zu dem Lagerplatz (31) transportiert und dort platziert werden.

6. Verfahren nach einem der vorangehenden Ansprüche, **dadurch gekennzeichnet, dass** zur Ausführung eines Kommissionsauftrags das oberste Tablar (20) des Warenstapels angehoben und zu einer Einzelwarenentnahme transportiert wird, in der kommissionsabhängig eine oder mehrere Waren von dem Tablar entnommen werden, und dass das so teilentleerte Tablar in den Lagerbereich (30) zurücktransportiert und oben auf einem aus vollständig bestückten Tablaren zusammengesetzten Warenstapel abgesetzt wird.

7. Verfahren nach Anspruch 6, **dadurch gekennzeichnet, dass** das teilentleerte Tablar nach dessen Rücktransport auf demselben Warenstapel abgesetzt wird, dem es zuvor entnommen wurde.

8. Verfahren nach Anspruch 6 oder 7, **dadurch gekennzeichnet, dass** die Neueinlagerung der Waren von der einen, und die kommissionsabhängige Ein- und Auslagerung der Tablare (20) von der anderen der einander abgewandten Stirnseiten des jeweiligen Lagerplatzes (31) aus erfolgt.

9. Verfahren nach Anspruch 6 oder 7, **dadurch gekennzeichnet, dass** die Neueinlagerung der Waren und die kommissionsabhängige Ein- und Auslagerung der Tablare (20) von derselben Stirnseite des jeweiligen Lagerplatzes (31) aus erfolgt.

10. Verfahren nach Anspruch 9, **dadurch gekennzeichnet, dass** die Ein- und Auslagerung sowohl von Paletten (10) als auch von Tablaren (20) durch dieselbe Transporteinrichtung, z. B. ein Regalbediengerät (40), erfolgt.

11. Verfahren nach einem der vorangehenden Ansprüche, **dadurch gekennzeichnet, dass** vor der Platzierung eines mit einer Schicht Waren (5) bestückten Tablars (20) auf der geschichteten Anordnung die Oberseite (27) der Schicht hinsichtlich ihrer Ebenheit und/oder ihrer Neigung sensiert wird.

12. Verfahren nach einem der vorangehenden Ansprüche, **dadurch gekennzeichnet, dass** eine erste und mindestens eine weitere geschichtete Anordnung unmittelbar nebeneinander und ohne eine dazwischen befindliche Begrenzung in dem Lagerbereich (30) platziert werden.

13. Verfahren nach einem der vorangehenden Ansprüche, **dadurch gekennzeichnet, dass** die Waren (5) auf einer Beladefläche (21) des Tablars (20) angeordnet werden, die flach und ohne Unterteilung ist.

14. Verfahren nach einem der vorangehenden Ansprüche, **dadurch gekennzeichnet, dass** jedes Tablar (20) mit zwei Handhabungsstrukturen (22A, 22B) versehen ist, und dass die Handhabungsstrukturen (22A, 22B) jeweils seitlich außerhalb der Beladefläche (21) des Tablars (20) angeordnet sind.

## Claims

1. Method for storing and order-picking articles, comprising the following steps:
a) providing a pallet of articles (3) of congeneric articles (5) stacked in a plurality of horizontal layers, each layer containing a plurality of the articles,
b) transferring the articles by arranging all articles of the pallet of articles either on shelf boards (20) or on the pallet (10), only one single layer of articles (5) being situated on each shelf board or the pallet,
c) placing the shelves (20) thus populated with articles (5) at a storage place (31) within a storage region (30),
**characterized in that** the placing of the populated shelf boards (20), which are equipped with handling structures (22A, 22B, 22C) for a rack feeder (40), takes place in an arrangement of layers one above the other.

2. Method according to Claim 1, **characterized by** the layered arrangement of the populated shelf boards on the pallet (10) acting as a base.

3. Method according to Claim 1, **characterized by** the layered arrangement of the populated shelf boards on the pallet (10) acting as a base populated with a layer of articles (S1).

4. Method according to one of Claims 1 to 3, **characterized in that** the shelf boards having the articles arranged thereon are individually conveyed to a storage place (31) and are layered there one above the other.

5. Method according to one of Claims 1 to 3, **characterized in that** the shelf boards having the articles arranged thereon are conveyed to the storage place (31), and placed there, in an already layered arrangement.

6. Method according to one of the preceding claims, **characterized in that** for executing an order-picking job, the uppermost shelf board (20) of the stack of articles is raised and conveyed to a removal point for individual articles, in which removal point, depending on order-picking, one or more articles are removed from the shelf board, and **in that** the shelf board which has been partially emptied in this manner is conveyed back to the storage region (30) and is deposited on top of a stack of articles which is composed of fully populated shelf boards.

7. Method according to Claim 6, **characterized in that**, after having been conveyed back, the partially emptied shelf board is deposited on the same stack of articles from which it was previously removed.

8. Method according to Claim 6 or 7, **characterized in that** the fresh storage of the articles takes place from one end side, and the order-picking dependent storage and retrieval of the shelf boards (20) take place from the other of the end sides, which end sides face away from one another, of the respective storage place (31).

9. Method according to Claim 6 or 7, **characterized in that** the fresh storage of articles and the order-picking dependent storage and retrieval of the shelf boards (20) take place from the same end side of the respective storage place (31).

10. Method according to Claim 9, **characterized in that** the storage and retrieval of both pallets (10) and shelf board (20) take place by way of the same conveying unit, e.g. a rack feeder (40).

11. Method according to one of the preceding claims, **characterized in that**, prior to placing a shelf board (20) populated with a layer of articles (5) on the layered arrangement, the upper side (27) of the layer is sensed with respect to its evenness and/or its inclination.

12. Method according to one of the preceding claims, **characterized in that** a first and at least one further layered arrangement are placed immediately beside one another and without any delimitation situated between them in the storage region (30).

13. Method according to one of the preceding claims, **characterized in that** the articles (5) are arranged on a loading face (21), which is flat and without partition, of the shelf board (20).

14. Method according to one of the preceding claims, **characterized in that** each shelf board (20) is provided with two handling structures (22A, 22B), and **in that** the handling structures (22A, 22B) are in each case arranged laterally outside the loading face (21) of the shelf board (20).

## Revendications

1. Procédé de stockage et de préparation de commandes d'articles, comprenant les étapes :
a) préparation d'une palette d'articles (3) à partir d'articles similaires (5) stratifiés en plusieurs couches horizontales, chaque couche contenant une pluralité d'articles,
b) déplacement des articles en agençant tous les articles de la palette d'articles soit sur des plateaux (20) soit sur la palette (10), seulement une couche unique d'articles (5) se trouvant sur chaque plateau ou sur la palette,
c) placement des plateaux (20) ainsi garnis d'articles (5) sur un emplacement d'entreposage (31) à l'intérieur d'une zone d'entreposage (30), **caractérisé en ce que** le placement des plateaux (20) garnis pourvus de structures de manutention (22A, 22B, 22C) pour un transtockeur (40) s'effectue suivant un agencement de couches les unes sur les autres.

2. Procédé selon la revendication 1, **caractérisé par** l'agencement stratifié des plateaux garnis sur la palette (10) en tant que support.

3. Procédé selon la revendication 1, **caractérisé par** l'agencement stratifié des plateaux garnis sur la palette (10) garnie d'une couche d'articles (S1) en tant que support.

4. Procédé selon l'une quelconque des revendications 1 à 3, **caractérisé en ce que** les plateaux dotés des articles disposés sur ceux-ci sont transportés individuellement jusqu'à l'emplacement d'entreposage (31) et y sont disposés en couches les uns sur les autres.

5. Procédé selon l'une quelconque des revendications 1 à 3, **caractérisé en ce que** les plateaux dotés des articles disposés sur ceux-ci sont transportés, en un agencement déjà stratifié, jusqu'à l'emplacement d'entreposage (31) et y sont placés.

6. Procédé selon l'une quelconque des revendications précédentes, **caractérisé en ce que**, pour réaliser un ordre de préparation de commande, le plateau le plus en haut (20) de la pile d'articles est soulevé et est transporté jusqu'à un prélèvement d'articles individuels dans lequel, en fonction de la commande, un ou plusieurs articles sont prélevés du plateau, et **en ce que** le plateau ainsi partiellement vidé est ramené dans la zone d'entreposage (30) et est déposé en haut sur une pile d'articles composée de plateaux complètement garnis.

7. Procédé selon la revendication 6, **caractérisé en ce que** le plateau partiellement vidé est, après son transport de retour, déposé sur la même pile d'articles dont il a préalablement été prélevé.

8. Procédé selon la revendication 6 ou 7, **caractérisé en ce que** le restockage des articles s'effectue d'un des côtés frontaux opposés l'un à l'autre de l'emplacement d'entreposage (31) respectif, et le stockage et le déstockage, dépendant de la commande, des plateaux (20) s'effectuent de l'autre côté frontal.

9. Procédé selon la revendication 6 ou 7, **caractérisé en ce que** le restockage des articles ainsi que le stockage et le déstockage, dépendant de la commande, des plateaux (20) s'effectuent du même côté frontal de l'emplacement d'entreposage (31) respectif.

10. Procédé selon la revendication 9, **caractérisé en ce que** le stockage et le déstockage non seulement de palettes (10) mais aussi de plateaux (20) s'effectuent au moyen du même dispositif de transport, par exemple un transtockeur (40).

11. Procédé selon l'une quelconque des revendications précédentes, **caractérisé en ce qu'**avant le placement d'un plateau (20) garni d'une couche d'articles (5) sur l'agencement stratifié, le côté supérieur (27) de la couche est détecté en termes de sa planéité et/ou de son inclinaison.

12. Procédé selon l'une quelconque des revendications précédentes, **caractérisé en ce qu'**un premier agencement stratifié et au moins un agencement stratifié supplémentaire sont placés dans la zone d'entreposage (30) de manière immédiatement juxtaposée et sans limitation se trouvant entre eux.

13. Procédé selon l'une quelconque des revendications précédentes, **caractérisé en ce que** les articles (5) sont disposés sur une surface de chargement (21) du plateau (20), laquelle est plate et sans subdivision.

14. Procédé selon l'une quelconque des revendications précédentes, **caractérisé en ce que** chaque plateau (20) est pourvu de deux structures de manutention (22A, 22B), et **en ce que** les structures de manutention (22A, 22B) sont respectivement disposées latéralement à l'extérieur de la surface de chargement (21) du plateau (20).
